(19) Europäisches Patentamt
European Patent Office
Office européen des brevets

(11) **EP 3 516 257 B1**

(12) **EUROPÄISCHE PATENTSCHRIFT**

(45) Veröffentlichungstag und Bekanntmachung des Hinweises auf die Patenterteilung:
**11.11.2020   Patentblatt 2020/46**

(21) Anmeldenummer: **17769053.4**

(22) Anmeldetag: **18.09.2017**

(51) Int Cl.:
**F16D 65/12** *(2006.01)*

(86) Internationale Anmeldenummer:
**PCT/EP2017/073426**

(87) Internationale Veröffentlichungsnummer:
**WO 2018/054816 (29.03.2018 Gazette 2018/13)**

(54) **BREMSSCHEIBE FÜR EINE SCHEIBENBREMSE UND SCHEIBENBREMSE**

BRAKE DISC FOR A DISC BRAKE, AND DISC BRAKE

DISQUE DE FREIN POUR FREIN A DISQUE, ET FREIN A DISQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2016   DE 102016117779**

(43) Veröffentlichungstag der Anmeldung:
**31.07.2019   Patentblatt 2019/31**

(73) Patentinhaber: **KNORR-BREMSE Systeme für Nutzfahrzeuge GmbH
80809 München (DE)**

(72) Erfinder: **RADHAKRISHNAN, Harish
Chennai 600031 (IN)**

(56) Entgegenhaltungen:
WO-A1-2015/092671     WO-A1-2017/153873
DE-A1-102013 210 700     DE-C1- 19 841 096
DE-U1-202015 102 580

**Beschreibung**

Die Erfindung betrifft eine Bremsscheibe für eine Scheibenbremse nach dem Oberbegriff des Anspruchs 1, wie z.B. aus DE-A-10 2013 210 700 oder WO-A-2015/092671 bekannt. Die Erfindung betrifft auch eine Scheibenbremse mit einer Bremsscheibe.

Eine derartige Bremsscheibe ist ein Teil einer Fahrzeugbremse, die als Scheibenbremse ausgebildet ist. Es sind unterschiedliche Betätigungsarten, z.B. pneumatisch, hydraulisch, elektrisch und auch Kombinationen daraus, zur Betätigung einer solchen Scheibenbremse in Verwendung. Die Scheibenbremse wird durch eine Zuspannvorrichtung, z.B. ein Bremsdrehhebel, welcher mit einem Druckluftzylinder verbunden ist oder auch von einer elektrischen Antriebseinheit betätigt werden kann, zugespannt.

Mittels der Scheibenbremse kann ein sich bewegendes Fahrzeug abgebremst werden, um dessen Geschwindigkeit zu verringern oder dieses zu einem vollständigen Halten zu bringen. Die Bremsscheibe wandelt bei einem Bremsvorgang in Kombination mit Reibbelägen der Scheibenbremse kinetische Energie in Wärmeenergie um. Bei dieser Energieumwandlung durchläuft die Bremsscheibe einen Aufheiz- und Abkühlzyklus, Die Wirksamkeit der Bremsscheibe hängt davon ab, wie schnell sich die Bremsscheibe abkühlen kann und wie unterschiedlich sich die Abkühlungsraten für beide Seiten der Bremsscheibe gestalten.

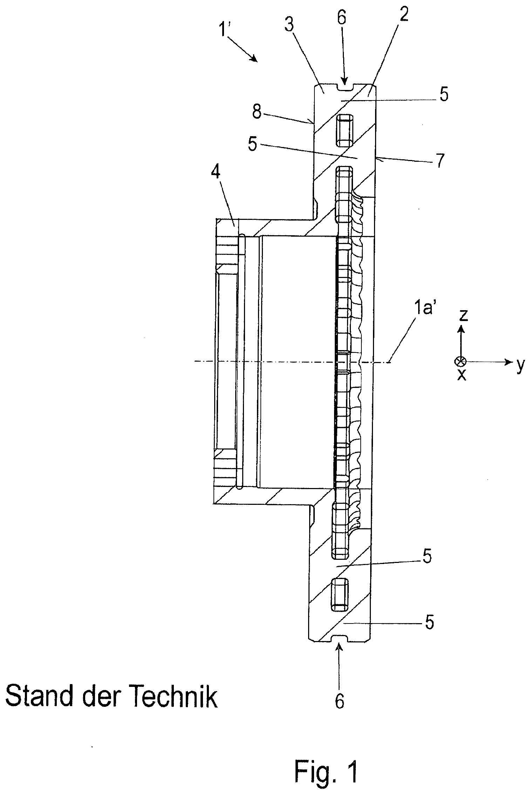

In **Fig. 1** ist eine schematische Schnittansicht einer herkömmlichen Bremsscheibe 1' dargestellt. Die Bremsscheibe 1 ist als eine so genannte innenbelüftete Bremsscheibe 1' mit zwei zu einer gemeinsamen Bremsscheibenachse 1'a konzentrischen Reibringen, nämlich einem Innenreibring 2 und einem Außenreibring 3, ausgebildet, Der Innenreibring 2 weist mit einer Außenseite 7 zu einem nicht gezeigten Fahrzeug. Der Außenreibring 3 ist mit einer Nabe 4 verbunden und weist mit einer Außenseite 8 zu einem nicht gezeigten zugehörigen Rad, welches an der Nabe 4 befestigt werden kann. Die jeweiligen Innenseiten des Innenreibrings 2 und des Außenreibrings 3 liegen einander gegenüber und sind voneinander durch Stege 5 beabstandet, Auf diese Weise ist zwischen den Reibringen 2, 3 ein Zwischenraum gebildet, welcher als Kühlkanal 6 bezeichnet wird.

Weiterhin ist in Fig. 1 eine Schirmung S der Bremsscheibe 1' durch Erwärmung durch gestrichelte Linien schematisch angedeutet. Der Begriff "Schirmung" bzw.

"Coning" ist in der Fachliteratur, z.B. Breuer/Bill (Hrsg.) Bremsenhandbuch Friedrich&Sohn Verlag, Wiesbaden 32006, ausführlich beschrieben.

EP 1 396 654 A2 illustriert eine Bremsscheibe für eine Scheibenbremse mit zwei einander gegenüberliegenden Reibscheiben, zwischen denen ein insgesamt ringförmiger Kühlluftkanal ausgebildet ist, der von die beiden Reibscheiben verbindenden Elementen unterbrochen ist. Die Verbindungselemente erzeugen eine turbulente Durchströmung des Kühlluftkanales. Zur verbesserten Wärmeabführung weist der Kühlluftkanal darüber hinaus einen sich erweiternden Querschnitt auf, durch den durch Reflexion Strahlungswärme abgeführt wird.

Eine typische Bremsscheibe weist eine Nabe bzw. einen Hut auf der Seite auf, welche zum Rad weist. Dies bedeutet, dass die thermischen Massen auf beiden Seiten der Bremsscheibe nicht gleich sind, was wiederum zu unterschiedlichen Abkühlraten zwischen den Seiten der Bremsscheibe führen kann, Dieser Unterschied kann einen Einfluss auf das so genannte Schirmungsverhalten der Bremsscheibe und schließlich auf eine mögliche Bildung von Wärmerissen haben.

Daher besteht die Aufgabe der vorliegenden Erfindung darin, eine verbesserte Bremsscheibe mit einer verringerten Schirmung und einer reduzierten Wärmerissanfälligkeit bereitzustellen und eine verbesserte Scheibenbremse zu schaffen.

Die Aufgabe wird durch eine Bremsscheibe mit den Merkmalen des Anspruchs 1 gelöst.

Die Aufgabe wird außerdem durch eine Scheibenbremse mit den Merkmalen des Anspruchs 12 gelöst.

Es wird eine Bremsscheibe geschaffen, die gleichmäßigere Abkühlraten ihrer Reibringe als im Stand der Technik aufweist, wodurch eine Schirmung verringert und eine Wärmerissanfälligkeit reduziert werden kann.

Eine erfindungsgemäße Bremsscheibe für eine Scheibenbremse, insbesondere für ein Kraftfahrzeug, ist als innenbelüftete Bremsscheibe mit einem Innenreibring und einem Außenreibring, welche einander gegenüberliegen und voneinander mit Stegen unter Bildung eines Zwischenraums als Kühlkanal beabstandet und verbunden sind, ausgebildet, wobei der Außenreibring mit einer Nabe verbunden ist und wobei eine erste Anzahl von Stegen im Verlauf einer Längsachse eines jeweiligen Stegs Querschnitte unterschiedlicher Größe aufweist. Eine zweite Anzahl von Stegen der ersten Anzahl von Stegen sind miteinander verbunden.

Unter dem Begriff "Querschnitte unterschiedlicher Größe" ist zu verstehen, dass sich ein Querschnitt des betreffenden Stegs ausgehend von einem Ende des Stegs über den Verlauf des Stegs längs seiner Längsachse bis zu dem anderen Ende des Stegs bzw. zu dem Ende eines Abschnitts in seiner Größe in Abhängigkeit von der Koordinate der Längsachse verändert.

Daraus ergibt sich der Vorteil, dass ein Abkühlverhalten des Innenreibrings und des Außenreibrings unterschiedlich beeinflussbar sind, wodurch sich der weitere Vorteil eines gleichmäßigen Abkühlverhaltens der Bremsscheibe erzielen lässt.

Mit dem Begriff "eine Anzahl von Stegen" ist einer oder sind mehrere Stege aller vorhandenen Stege gemeint.

Eine weitere Ausführung sieht vor, dass die Anzahl von Stegen sämtliche Stege umfasst.

In einer Ausführung ist die zweite Anzahl von Stegen zu zweit, zu dritt oder zu viert miteinander verbunden. Dies ermöglicht eine vorteilhafte Anpassung an unterschiedliche Einsatzfälle. Die Verbindungen können individuell so gewählt werden, dass eine bestimmte gleichmäßige Temperaturverteilung erreicht werden kann, wodurch ein vorteilhaft effizienter Wärmeabtransport möglich ist.

Eine weitere Ausführung sieht vor, dass die Verbindungen der zweiten Anzahl von Stegen gerade, schräg, rautenförmig, sternförmig, abgerundet oder/und radial zu einer Bremsscheibenachse ausgebildet sind. Dies ermöglicht einen vorteilhaft vergrößerten Einsatzbereich.

Die Stege weisen jeweils zwei Abschnitte auf, nämlich einen Innenstegabschnitt, der mit einer Innenfläche des Innenreibrings verbunden ist, und einen Außenstegabschnitt, der mit einer Innenfläche des Außenreibrings verbunden ist, wobei ein Querschnitt des Innenstegabschnitts eine Größe aufweist, die zu einer Größe eines Querschnitts des Außenstegabschnitts ist Auf diese Weise kann ein Wärmetransport von den Reibringen über die Stege in die erzwungene Konvektion im Kühlkanal zwischen den Reibringen unterschiedlich gestaltet werden.

Der Innenstegabschnitt eines jeden Stegs der Anzahl von Stegen weist einen größeren Querschnitt als der Außenstegabschnitt eines jeden Stegs auf. Damit ergibt sich der Vorteil, dass eine Wärmeübertragungsfläche des Innenstegabschnitts größer als eine Wärmeübertragungsfläche des Außenstegabschnitts ist, wodurch bei Bremsvorgängen eine Abkühlung des Innenreibrings über den Kühlkanal schneller erfolgen kann als eine Abkühlung des Außenreibrings über den Kühlkanal. So ergibt sich vorteilhafterweise trotzdem eine gleichmäßige Abkühlung der gesamten Bremsscheibe, da der Außenreibring über Wärmeleitung durch die an ihm angebrachte Nabe abkühlt.

Gemäß der Erfindung sind jeweils ein Innenstegabschnitt und ein Außenstegabschnitt eines jeden Stegs der Anzahl von Stegen in der Mitte des jeweiligen Stegs in Form einer Stufe untereinander verbunden, wobei diese Stufe einen Querschnittssprung als abrupte Querschnittsänderung bildet Damit kann ein unterschiedlicher Wärmeübergang der Außenflächen der Abschnitte des Stegs leicht erreicht werden.

Alternativ dazu kann der Querschnitt eines jeden Stegs der Anzahl von Stegen im Verlauf der Längsachse einen jeden Stegs ausgehend von der Innenfläche des Innenreibrings stufenlos abnehmen.

Eine weitere Ausführung sieht vor, dass zumindest die Innenstegabschnitte in ihren Verbindungsbereichen zwischen den Stegen und der Innenfläche des Innenreibrings im Verlauf der Längsachse eines jeden Stegs jeweils bis zu der jeweiligen Innenfläche eine stetige Zunahme ihres Querschnitts in Form einer Fase oder einer Abrundung aufweisen. Dies ist nicht nur vorteilhaft für die Herstellung der Bremsscheibe als Gussteil, sondern auch vorteilhaft für die Wärmeleitung von dem Innenreibring in die Stege, da so ein Wärmeleitwiderstand verringert werden kann.

In einer noch weiteren Ausführung können auf der Innenfläche des Innenreibrings zusätzliche Vorsprünge vorgesehen sein, die von der Innenfläche des Reibrings in den Kühlkanal hervorstehen. Da diese Vorsprünge nicht mit dem Außerireibring in wärmeleitendem Kontakt stehen, kann somit die Abkühlrate des Innenreibrings erhöht werden.

Eine andere Ausführung sieht vor, dass die Stege auf zu einer Bremsscheibenachse konzentrisch angeordneten Kreisen angeordnet sind. Dies ist sowohl für eine gleichmäßige erzwungene Konvektion als auch für einen Rundlauf der Bremsscheibe von Vorteil.

Zudem können in einer noch anderen Ausführung die Querschnitte der Stege der Anzahl von Stegen je Kreis kleiner in Bezug auf den vorherigen Kreis ausgehend von dem größten Kreis in der Nähe des Außenumfangs der Bremsscheibe in radialer Richtung auf die Bremsscheibenachse hin werden, wodurch eine Wärmeabfuhr vorteilhaft begünstigt werden kann.

In einer weiteren Ausführung ist die Bremsscheibe mit einer Nabe einteilig ausgebildet. Auf diese Weise kann auch eine solche Ausführung individuell hinsichtlich der Wärmeabführung angepasst werden,

Eine erfindungsgemäße Scheibenbremse ist mit der oben beschriebenen Bremsscheibe ausgerüstet.

Die Scheibenbremse kann auch eine druckluftbetätigte Scheibenbremse sein.

Somit ergeben sich zudem folgende Vorteile:

- eine verbesserte Temperaturstabilisierung
- eine niedrigere Oberflächentemperatur der Bremsscheibe
- ein erhöhter konvektiver Wärmeabtransport und erhöhte Abkühlungsraten
- eine reduzierte Schirmung der Bremsscheibe
- eine Verbesserung eines Wärmerissverhaltens der Bremsscheibe
- ein entsprechend reduzierter Verschleiß der Reibkomponenten Reibbelag und Bremsscheibe

Die Erfindung wird nun anhand einer beispielhaften Ausführung mit Bezug auf die beigefügten Zeichnungen näher erläutert. Hierbei zeigen:

Fig. 1     eine schematische Schnittansicht einer herkömmlichen Bremsscheibe;

Fig. 2        eine schematische Perspektivansicht einer erfindungsgemäßen Scheibenbremse mit einer erfindungsgemäßen Bremsscheibe;

Fig. 3        eine schematische Teilschnittansicht eines Ausführungsbeispiels der erfindungsgemäßen Bremsscheibe;

Fig. 3a       eine schematische Teilschnittansicht weiterer Varianten der erfindungsgemäßen Bremsscheibe;

Fig. 4        eine schematische Prinzipskizze des Ausführungsbeispiels der erfindungsgemäßen Bremsscheibe;

Fig. 5        eine schematische Schnittansicht der erfindungsgemäßen Bremsscheibe nach Fig. 4;

Fig. 6        eine vergrößerte Schnittansicht des Bereichs VI der erfindungsgemäßen Bremsscheibe nach Fig. 5;

Fig. 7-7a     Schnittansichten von Reibbereichen von Bremsscheiben mit Temperaturzonen;

Fig. 8-8a     Schnittansichten von Freibereichen von Bremsscheiben mit Temperaturzonen; und

Fig. 9-12     schematische Ansichten weiterer Varianten der erfindungsgemäßen Bremsscheibe.

Fig. 1        ist als Stand der Technik bereits in der Beschreibungseinleitung erläutert.

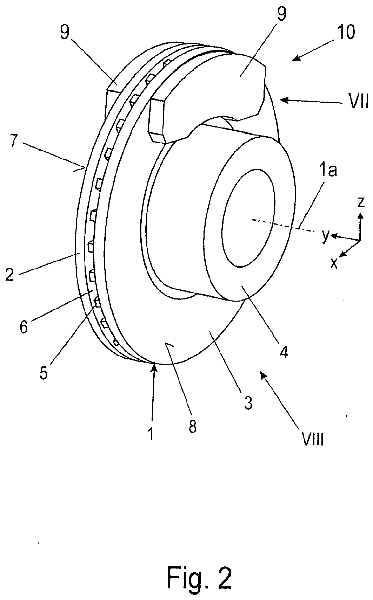

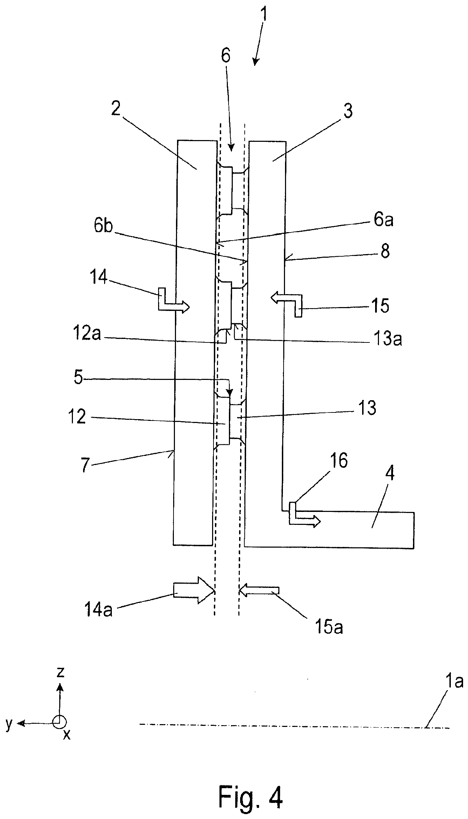

Fig. 2 zeigt eine schematische Perspektivansicht einer erfindungsgemäßen Scheibenbremse 10 mit einer erfindungsgemäßen Bremsscheibe 1.
Ein Koordinatensystem x, y, z dient zur Orientierung. Die x-Koordinate verläuft in vorwärts gerichteter Fahrtrichtung eines nicht gezeigten Fahrzeugs, dem die Scheibenbremse 1 zugeordnet ist, Die y-Koordinate verläuft in der Breite dieses Fahrzeugs, wobei die z-Koordinate in der Höhe desselben verläuft.
Die Scheibenbremse 10 ist hier nur durch zwei Reibbeläge 9 angedeutet. Der Aufbau einer derartigen Scheibenbremse 10 kann z.B. dem Dokument EP 0 566 008 A1 entnommen werden.
Die erfindungsgemäße Bremsscheibe 1 ist auch eine innenbelüftete Bremsscheibe 1 mit einem Innenreibring 2 und einem Außenreibring 3. Die Bremsscheibenachse 1a, um welche die Bremsscheibe 1 drehbar ist, verläuft in y-Richtung.
Der Innenreibring 2 weist mit seiner Außenseite 7 zu einem nicht gezeigten Fahrzeug, dem die Scheibenbremse 10 zugeordnet ist. Der Außenreibring 3 ist hier auch mit einer Nabe 4 verbunden und weist mit einer Außenseite 8 zu einem nicht gezeigten zugehörigen Rad, welches auf der Nabe 4 befestigt werden kann. Die Reibringe 2, 3 und deren Außen- und Innenseiten liegen jeweils in einer x-z-Ebene.
Die jeweiligen Innenseiten des innenreibrings 2 und des Außenreibrings 3 liegen auch hier einander gegenüber, sind voneinander durch Stege 5 beabstandet und bilden den Kühlkanal 6. Die Stege 5 werden unten weiter noch ausführlich beschrieben.
Die Scheibenbremse 10 greift mit ihren Reibbelägen 9 an den Reibringen 2, 3, in einem Reibbereich VII der Bremsscheibe 1 an, der in Fig. 1 oben angeordnet ist. Diametral dazu wird hier der untere Bereich der Bremsscheibe 1 als Freibereich VIII bezeichnet.

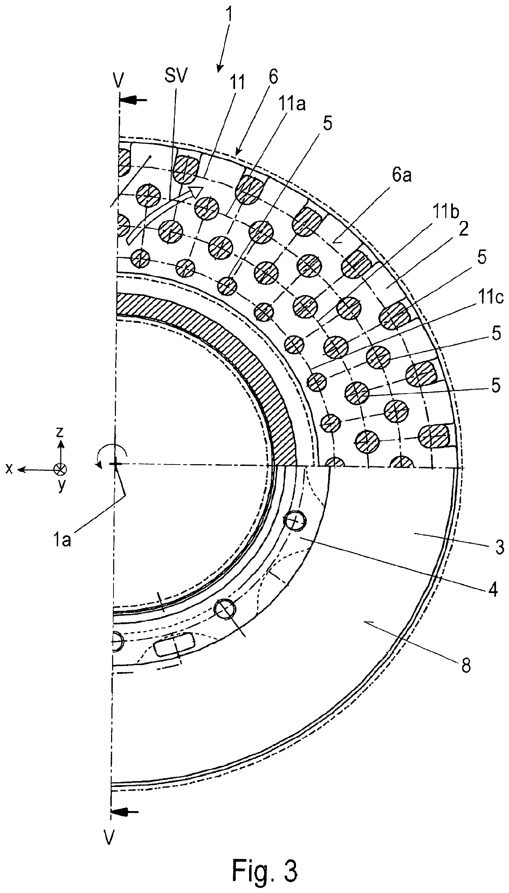

In Fig. 3 ist eine schematische Teilschnittansicht eines Ausführungsbeispiels der erfindungsgemäßen Bremsscheibe 1 gezeigt.
Die Ansicht verläuft in y-Richtung auf die Außenseite 8 des Außenreibrings 3 der Bremsscheibe 1, wobei nur die rechte Hälfte der Bremsscheibe 1 gezeigt ist, und der rechte obere Quadrant eine Schnittansicht in einer x-z-Ebene im Bereich des Kühlkanals 6 darstellt. Auf einer Innenfläche 6a des Innenreibrings 2 sind die Stege 5 auf vier zu der Bremsscheibenachse 1a konzentrischen Kreisen 11, 11a, 11b und 11c jeweils "auf Lücke" stehend angeordnet. Das heißt, dass die Stege 5 auf dem Kreis 11a und 11c gegenüber den Stegen 5 auf den Kreisen 11 und 11b um einen Winkelbetrag verdreht angeordnet sind. Die Kreise 11, 11a, 11b, 11c sind in radialer Richtung in gleichen Abständen zueinander angeordnet.
Ausgehend von dem größten Kreis 11 in der Nähe des Außenumfangs der Bremsscheibe 1 in radialer Richtung auf die Bremsscheibenachse 1a hin werden die Querschnitte der Stege 5 je Kreis 11a, 11b, 11c kleiner in Bezug auf den vorherigen Kreis.
In diesem Beispiel weisen die Stege 5 der Kreise 11a, 11b, 11c in der x-z-Schnittebene kreisförmige Querschnitte auf, wobei der Querschnitt der im Bereich des Außenumfangs der Bremsscheibe 1 auf dem Kreis 11 angeordneten Stege 5 aus einem Halbkreis und einem Quadrat mit abgerundeten Ecken besteht. Natürlich können auch andere Querschnittsformen möglich sein, wie z.B. ovaler Querschnitt oder auch zusammengesetzte Querschnitte.
Der Verlauf der gezeigten Querschnitte der Stege 5 in Richtung einer Längsachse eines Stegs 5 in y-Richtung über eine gesamte Steglänge ist jedoch unterschiedlich, wie unten im Zusammenhang mit Fig. 4 noch im Detail erläutert wird.

Wenn sich die Bremsscheibe 1 um die Bremsscheibenachse 1a in Fig. 3 gegen den Uhrzeigersinn dreht, was durch einen Pfeil angedeutet ist, bewirkt dies eine Strömung der Luft in dem Kühlkanal 6 von innen nach außen. Dies ist durch einen Pfeil als Strömungsverlauf SV beispielhaft dargestellt. Auf diese Weise wird eine Konvektion der Luft im Kühlkanal 6 erzwungen, wodurch ein Wärmeabtransport von den Innenflächen 6a, 6b der Reibringe 2, 3, und der Stege 5 durch Wärmekonvektion an die Umgebung erfolgt.

In Fig. 3a ist eine schematische Teilschnittansicht weiterer Varianten der erfindungsgemäßen Bremsscheibe 1 dargestellt.

Auf der Innenfläche 6a des Innenreibrings 2 sind hier vier Quadranten I, II, III, IV zu je 90° angeordnet, in denen unterschiedliche Steganordnungen gezeigt sind. Die Anordnung der Stege 5 eines Quadranten ist nur beispielhaft und kann entweder jeweils für alle Quadranten gleich sein, so dass hier vier Ausführungsformen der Bremsscheibe 1 gezeigt sind. Es sind natürlich aber auch Kombinationen der Anordnungen möglich.

Die Grundanordnung wie auch der Querschnitt der Stege 5 ist wie in Fig. 3 auf den vier konzentrischen Kreisen 11, 11a, 11b, 11c.

In dem ersten Quadranten I sind zwei Stege 5 der äußeren zwei Kreise 11, 11a mit einer schräg verlaufenden Verbindung 50 verbunden. Dies sind ein Steg 5 auf dem äußeren Kreis 11a und ein auf Lücke in Drehrichtung folgender Steg auf dem nächsten inneren Kreis 11b. Dazwischen sind jeweils drei Stege 5 auf den inneren drei Kreisen 11a, 11b, 11c mit einer schräg bzw. gebogen verlaufenden Verbindung 51 verbunden. Hierbei handelt es sich um die gleiche schräge Verbindung wie bei den zwei Stegen 5, jedoch ist noch ein dritter nachfolgender Steg 5 auf dem innersten Kreis 11c auf Lücke dazu gekommen.

In dem zweiten Quadranten II sind vier Stege 5 mit einer rautenförmigen Verbindung 52 auf den drei inneren Kreisen 11a, 11b, 11c verbunden. Dann folgen zwei Stege 5 auf dem Außenkreis 11 und dem mittleren Kreis 11b mit einer radialen geraden Verbindung 50a. Weiterhin sind wieder vier Stege 5 der inneren drei Kreise 11a, 11b, 11c in einer Art Sternformverbindung 53 mit abgerundeten Seiten verbunden. Schließlich ist ein Steg 5 auf dem äußeren Kreis 11 mit zwei Stegen 5 auf dem nächsten inneren Kreis 11a verbunden, wobei der Steg 5 auf dem äußeren Kreis 11 auf Lücke zu den beiden anderen Stegen 5 steht. Die Verbindung 54 dieser Anordnung ist sternförmig mit abgerundeten Seiten.

Die Anordnungen der verbundenen Stege 5 in dem dritten Quadranten III umfasst jeweils zwei Stege 5 mit radialer Verbindung 50a, wobei die verbundenen Stege 5 nacheinander versetzt sind, d.h. zunächst ein Steg 5 auf dem äußeren Kreis 11 mit einem Steg 5 auf dem vorletzten Kreis 11b, und dann ein Steg 5 auf dem Kreis 11a mit einem Steg 5 auf dem letzten Kreis 11c.

In dem vierten Quadranten IV sind die Stege 5 wie in Fig. 3 angeordnet. Hier sind zusätzlich zwei "heiße" Zonen 110 und 111 angedeutet, welche in den Kreisen 11 und 11b liegen.

Ein Durchmesser der inneren "heißen" Zone 110 beträgt etwa das 1,1 bis 1,4fache des Innendurchmessers der Bremsscheibe 1, wobei ein Durchmesser der äußeren "heißen" Zone 111 etwa dem 1,5 bis 1,6fachen des Innendurchmessers der Bremsscheibe 1 entspricht.

Die unterschiedlichen Anordnungen der Stege 5 mit ihren Verbindungen 50, 50a, 51, 52, 53 und 54 ergeben je nach Einsatzfall eine bessere und gleichmäßigere Oberflächentemperaturverteilung.

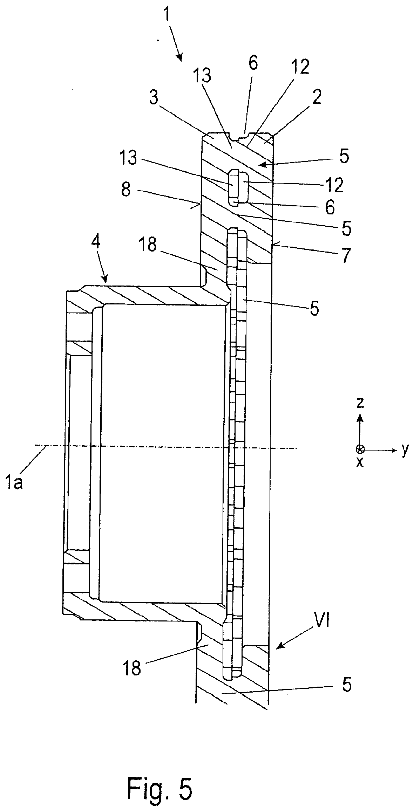

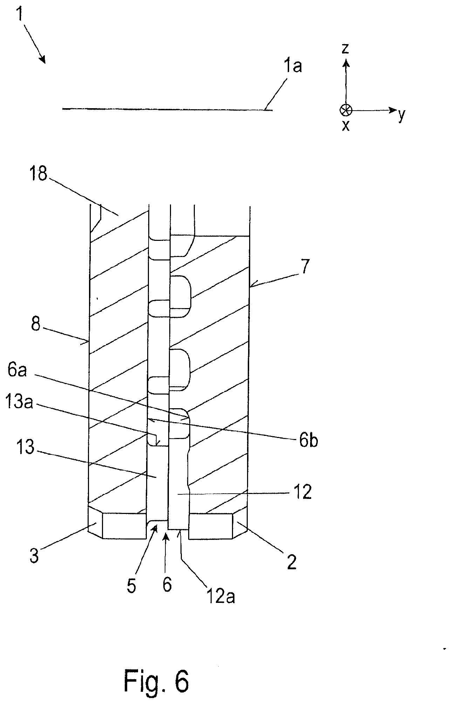

Fig. 4 zeigt eine schematische Prinzipskizze des Ausführungsbeispiels der erfindungsgemäßen Bremsscheibe 1. Fig. 5 stellt eine schematische Schnittansicht der erfindungsgemäßen Bremsscheibe 1 nach Fig. 4 dar. In Fig. 6 ist eine vergrößerte Schnittansicht des Bereichs VI der erfindungsgemäßen Bremsscheibe 1 nach Fig. 5 gezeigt.

In Fig. 4-6 ist deutlich zu erkennen, dass die Stege 5 jeweils aus zwei Abschnitten bestehen. So weisen die Stege 5 jeweils einen Innenstegabschnitt 12 und einen Außenstegabschnitt 13 auf, die in der Mitte in Form einer Stufe untereinander verbunden sind. Diese Stufe bildet hier einen Querschnittssprung, d.h. eine abrupte Querschnittsänderung.

Die Innenstegabschnitte 12 sind an der Innenfläche 6a des Innenreibrings 2 mit diesem verbunden, wohingegen die Außenstegabschnitte 13 an der Innenfläche 6b des Außenreibrings 3 mit diesem verbunden sind. Die Verbindungen der Stege 5 mit dem jeweiligen Reibring 2, 3 sind wärmeleitend ausgebildet, d.h. einstückig mit dem jeweiligen Reibring 2, 3 gestaltet, Zudem weisen die Verbindungsbereiche der Innenstegabschnitte 12 und der Außenstegabschnitte 13 jeweils bis zu der jeweiligen Innenfläche 6a, 6b eine stetige Zunahme ihres Querschnitts, hier ihres Durchmessers, auf. Dies kann eine Fase oder Abrundung (wie in Fig. 4, 5, 6 dargestellt) sein.

Der Begriff "unterschiedlicher Querschnitt" soll nun kurz erläutert werden. In der schematischen Darstellung in Fig. 4 ist der Innenstegabschnitt 12 an der Innenfläche 6a des Innenreibrings 2 über einen Verdingungsabschnitt angebracht, welcher eine umlaufende Abrundung aufweist. Ausgehend von der Innenfläche 6a, an welcher der Verbindungsabschnitt einen großen Ausgangsquerschnitt aufweist, verringert sich dieser Querschnitt im Verlauf einer gedachten Längsachse des zugehörigen Stegs 5 in gegenläufiger y-Richtung parallel zu der Bremsscheibenachse 1a innerhalb der Abrundung bis auf den Querschnitt des sich daran anschließenden zylinderförmigen Abschnitts des Innenstegabschnitts 12, der dann bis zu der Verbindung zu dem Außenstegabschnitt 13 verläuft. An der Verbindung zu dem Außenstegabschnitt 13 wird der Querschnitt abrupt kleiner und nimmt die Größe des zylinderförmigen Abschnitts des Außenstegabschnitts 13 an. An dem Ende des Außenstegabschnitts 13 schließt sich ein Verbindungsabschnitt an, der wie der Verbindungsabschnitt des Innenstegabschnitts 12 mit einer umlaufenden Abrundung ausgebildet ist, Dabei vergrößert sich der Querschnitt wieder im Verlauf dieses Verbindungsabschnitts bis an die Innenfläche 6b. Somit weist der Steg 5 bzw. eine Anzahl von Stegen 5 oder weisen sämtliche Stege 5 im Verlauf der Längsachse eines jeweiligen Stegs 5 Querschnitte unterschiedlicher Größe auf.

Die Innenstegabschnitte 12 weisen einen größeren Querschnitt als die Außenstegabschnitte 13 auf. Somit ist auch eine Innenstegaußenfläche 12a der Innenstegabschnitte 12 größer als eine Außenstegaußenfläche 13a der Außenstegabschnitte 13. Daraus ergibt sich, dass der größere Querschnitt der Innenstegabschnitte 12 einen Wärmefluss 14 von dem Innenreibring 2 mit einer größeren Wärmeleitung bzw. einem kleineren Wärmeleitungswiderstand als der kleinere Querschnitt der Außenstegabschnitte 13 einen Wärmefluss 15 von dem Außenreibring 3 in den Kühlkanal 6 leitet. Gleichzeitig ist ein Wärmeabtransport durch Wärmeübertragung von der größeren Innenstegaußenfläche 12a durch Konvektion über die Luftströmung im Kühlkanal 6 größer als ein Wärmeabtransport durch Wärmeübertragung von der kleineren Außenstegaußenfläche 12a.

Auf diese Weise ist ein Wärmetransport in das Fluidmedium, bei dem es ich hier um Luft handelt, in den Kühlkanal 6 von dem Innenreibring 2 größer als ein Wärmetransport von dem Außenreibring 3 in den Kühlkanal 6. Mit anderen Worten, der Innenreibring 2 wird durch die Konvektion der Luft im Kühlkanal 6 stärker als der Außenring 3 gekühlt. Dies ist durch unterschiedlich große Pfeile als jeweiliger Wärmefluss 14a und 15a angedeutet.

Die Stege 5 können hier mit ihrer abrupten Querschnittsänderung zudem eine zusätzliche Verwirbelung der erzwungenen Luftströmung bewirken, wodurch ein Wärmeübergang zwischen den vergrößerten Außenflächen der Innenstegabschnitte 12 ebenfalls vergrößert werden kann,

Da aber zusätzlich ein Wärmeabtransport aus dem Außenreibring 3 durch einen weiteren Wärmefluss 16 in die mit dem Außenreibring 3 verbundene Nabe 4 über einen Übertragungsabschnitt 18 erfolgt, kühlen sowohl der Innenreibring 2 als auch der Außenreibring 3 mit gleicher Kühlrate ab. Auf diese Weise erfolgt eine gleichmäßige Abkühlung beider Reibringe 2, 3 der Bremsscheibe 1, wodurch eine Schirmung der Bremsscheibe 1 einschließlich möglicher Wärmerisse bedeutend verringert werden kann.

Es soll nun anhand eines Vergleichs der Nußeltzahlen Nu gezeigt werden, dass der Wärmeabtransport über die Konvektion im Kühlkanal 6 mit den Innenstegaußenflächen 12a größer ist als mit den kleineren Außenstegaußenflächen 13a.

$$Nu = \frac{Konvektion}{W\ddot{a}rmeleitung} = \frac{h_r l}{k}$$

Die konvektive Wärmeübertragung zwischen den Stegflächen 12a, 13a und der Luftströmung bei erzwungener Konvektion im Kühlkanal 6 ist eine Funktion der Reynoldszahl Re und der Prandtlzahl Pr und kann durch den Wärmeübergangskoeffizienten $\alpha$ ausgedrückt werden. Dabei charakterisiert die Reynoldszahl Re die Strömungsform, wobei die Prandtlzahl Stoffgrößen im Wärmeübergang beschreibt.

$$\alpha(h_r) = f(\frac{Re \bullet Pr \bullet K}{l_{cool}}) \qquad (1)$$

$$\alpha(h_r) = (\frac{d_h}{l_{cool}})^{0,33}(\frac{K_a}{d_h})(Re \bullet Pr)^{0,33} \qquad (2)$$

Die Reynoldszahl Re und die Prandtlzahl Pr werden durch die folgenden Beziehungen substituiert.

$$Re = \frac{\rho_a d_h V_{avg}}{m_a}$$

$$Pr = \frac{C_a m_a}{k_a} \qquad (3)$$

Ordnen der Terme ergibt den folgenden Ausdruck für den Wärmeübergangskoeffizienten $\alpha$.

$$\alpha(h_r) = (\frac{1}{d})^{0,67}(k_a)^{0,67}(\rho_a V_{avg} C_a)^{0,33} \qquad (4)$$

Es folgt der Vergleich der Nußeitzahten Nu. Nach dem Kürzen der gemeinsamen Terme verbleibt der hydraulische Durchmesser d.

$$Nu = \frac{alt}{neu} = \frac{h_{r1}l_1}{h_{r2}l_2} = \frac{(d_1)^{0,33}}{(d_2)_{0,33}} \qquad (5)$$

Wenn beispielsweise $d_2 = 1,3 \cdot d_1$ ist, ergibt sich Nu=0,917. Das bedeutet, dass die konvektive Wärmeübertragung eine Vergrößerung von ca. 9% ergibt.

Diese Verbesserung konnte erfinderseitig in einer thermischen Beharrungszustandssimulation gekoppelt mit einem Strömungsfluid (hier: Luft) nachgewiesen werden. Die Simulation erfolgte derart, dass ein konstanter Wärmezufluss durch die Reibbeläge 9 im Bereich VII (siehe Fig. 2) angenommen wurde. Dabei wurde die Temperaturverteilung auf den Reibringen 2, 3 und besonders im Kühlkanal 6 ermittelt. Es konnte damit nachgewiesen werden, dass eine Verbesserung des Wärmeübergangskoeffizienten $\alpha$ und eine erniedrigte Oberflächentemperatur der Bremsscheibe 1 erzielt wurde.

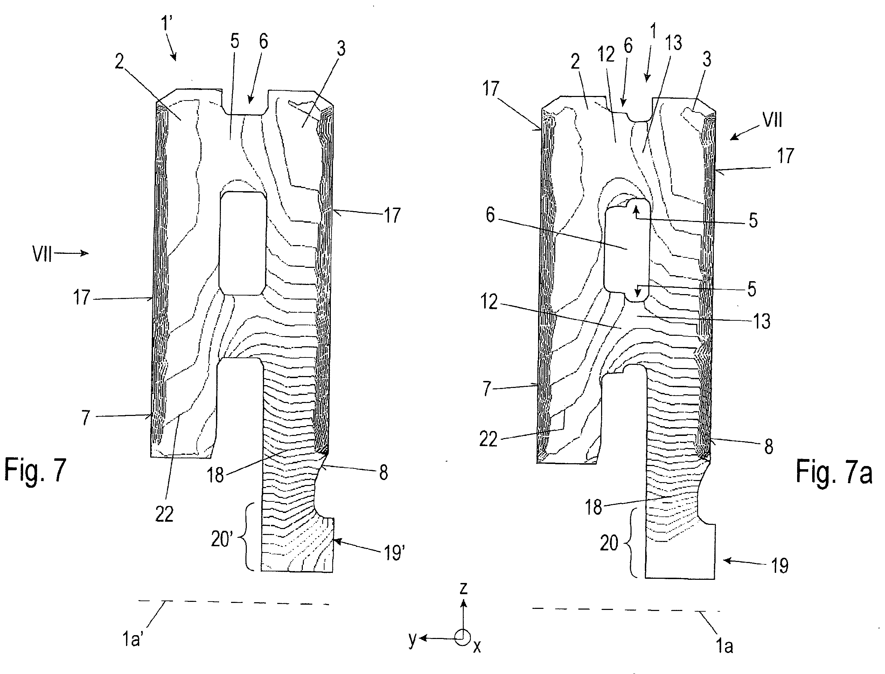

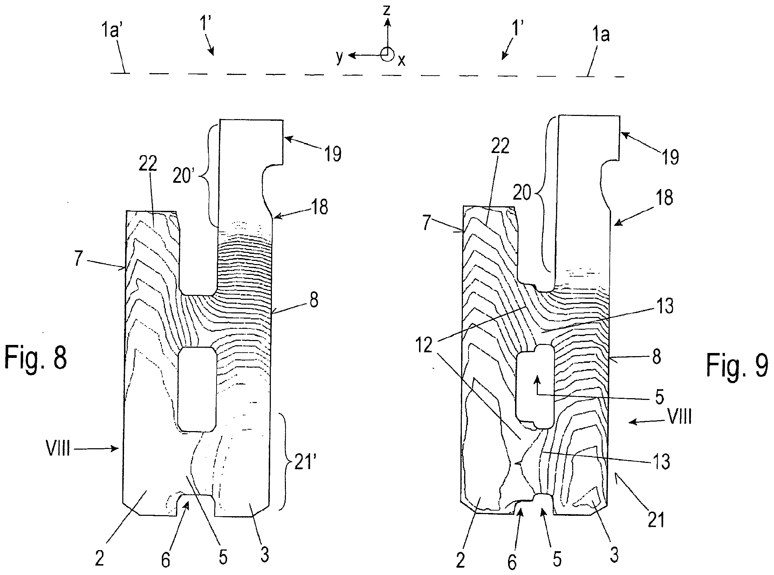

Dies ist in den Figuren **7-7a** und **8-8a** jeweils im Vergleich zwischen gleichen Bereichen einer herkömmlichen Bremsscheibe 1' und der erfindungsgemäßen Bremsscheibe 1 veranschaulicht, wobei die Figuren 7 und 8 jeweils die herkömmliche Bremsscheibe 1' zeigen. Eine zugehörige Fahrzeuggeschwindigkeit liegt bei diesen Beispielen im Bereich von 60 km/h.

In Figur 7 und 7a ist der Reibbereich VII der Reibbeläge 9 (siehe Fig. 2) mit den beiden Reibringen 2, 3 und dem Übertragungsabschnitt 18 von dem jeweiligen Außenreibring 3 zu der zugehörigen Nabe 4, von der jeweils ein Halsabschnitt 19, 19' gezeigt ist, dargestellt.

Mit den Bezugszeichen 20, 20' und der jeweils zugehörigen geschweiften Klammer sind Temperaturzonen 20, 20' der Halsabschnitte 19, 19' angedeutet.

Der Reibbereich VII des Innenreibrings 2 der herkömmlichen Bremsscheibe 1' umfasst eine gesamte Temperaturdifferenz von 678 bis 668 K.

Der Außenreibring 3 weist höhere Temperaturen von etwa 685 bis 678 K in einem wesentlich kürzeren, sich radial vom Außenumfang bis etwa über zwei Drittel zur Bremsscheibenachse 1'a hin erstreckenden Teilabschnitt des Reibbereiches VII auf. Dabei ist seine Temperaturverteilung ungleich derjenigen des Innenreibrings 2. An dem Außenreibring 3 ist hier bis in den Halsabschnitt 19' ein Temperaturgefälle von 684 bis 602 K zu verzeichnen. Es ist festzustellen, dass der Halsabschnitt 19' eine relativ kühle Temperaturzone 20' in einem Temperaturbereich von etwa 600 bis 620 K aufweist, die sich ungefähr über den halben Halsabschnitt radial erstreckt.

Im Gegensatz dazu ist in Fig. 7a deutlich zu erkennen, dass die Temperaturen des Innenreibrings 2 zu denen des Außenreibring 3 gegenüber Fig. 7 wesentlich gleichmäßiger verteilt und zudem auch niedriger sind.

So umfasst der Reibbereich VII des Innenreibrings 2 der erfindungsgemäßen Bremsscheibe 1 eine Temperaturdifferenz von 665 bis 651 K.

Der Außenreibring 3 weist im Wesentlichen gleiche Temperaturen wie der Innenreibring 2 von etwa 671 bis 651 K in einem nur gering kürzeren sich radial vom Außenumfang bis etwa über drei Viertel zur Bremsscheibenachse 1a hin erstreckenden Teilabschnitt des Reibbereiches VII auf. Dabei ist seine Temperaturverteilung fast gleich derjenigen des Innenreibrings 2. An dem Außenreibring 3 ist hier bis in den Halsabschnitt 19' ein Temperaturgefälle von 671 bis 603 K zu verzeichnen. Hier ist eine wesentlich längere kühle Temperaturzone 20 von etwa 600 bis 618 K vorhanden, die sich ungefähr über den gesamten Halsabschnitt 19' radial erstreckt.

Damit ist klar zu erkennen, dass die Ausbildung der Stege 5 der erfindungsgemäßen Bremsscheibe 1 nicht nur eine verbesserte Wärmeabfuhr sondern auch eine im Wesentlichen gleichmäßige Temperaturverteilung im Bereich der Reibbereiche VII des Innenreibrings 2 und des Außenreibrings 3 ermöglicht.

Fig. 8-8a zeigen den Freibereich VIII der Reibbeläge 9 (siehe Fig. 2) mit den beiden Reibringen 2, 3 und dem Übertragungsabschnitt 18 von dem jeweiligen Außenreibring 3 zu der zugehörigen Nabe 4, von der jeweils ein Halsabschnitt 19, 19' gezeigt ist.

Mit den Bezugszeichen 20, 20' und der jeweils zugehörigen geschweiften Klammer sind Temperaturzonen 20, 20' der Halsabschnitte 19, 19' angedeutet. Weitere Temperaturzonen 21, 21' betreffen den jeweiligen Freibereich VIII des zugehörigen Außenreibrings 3.

Der Freibereich VIII des Innenreibrings 2 der herkömmlichen Bremsscheibe 1' umfasst eine gesamte Temperaturdifferenz von 677 bis 668 K und unterscheidet sich damit kaum von der des Reibbereichs VII in Fig. 7.

Der Außenreibring 3 weist auch im Freibereich VIII höhere Temperaturen von etwa 680 bis 640 K in einem wesentlich kürzeren, sich radial vom Außenumfang bis etwa über zwei Drittel zur Bremsscheibenachse 1'a hin erstreckenden Teilabschnitt des Reibbereiches VIII auf. Dabei ist seine Temperaturverteilung ungleich derjenigen des Innenreibrings 2. An dem Außenreibring 3 ist hier bis in den Halsabschnitt 19' ein Temperaturgefälle von 680 bis 640 K zu verzeichnen. Der Halsabschnitt 19' weist hier eine relativ kühle Temperaturzone 20' in einem Temperaturbereich von etwa 640 bis 650 K auf, die sich ungefähr über vier Fünftel des Halsabschnitts 19' radial erstreckt.

Im Gegensatz dazu ist in Fig. 8a deutlich zu erkennen, dass die Temperaturen des Innenreibrings 2 zu denen des Außenreibring 3 gegenüber Fig. 8 auch im Freibereich VIII wesentlich gleichmäßiger verteilt und zudem auch niedriger sind.

So umfasst der Freibereich VIII des Innenreibrings 2 der erfindungsgemäßen Bremsscheibe 1 eine Temperaturdifferenz von 662 bis 650 K.

Der Außenreibring 3 weist im Wesentlichen gleiche Temperaturen wie der Innenreibring 2 von etwa 666 bis 651 K in einem nur unwesentlich kürzeren sich radial vom Außenumfang bis etwa über vier Fünftel zur Bremsscheibenachse 1a hin erstreckenden Teilabschnitt des Freibereiches VIII auf. Dabei ist seine Temperaturverteilung fast gleich derjenigen des Innenreibrings 2. An dem Außenreibring 3 ist hier bis in den Halsabschnitt 19' ein Temperaturgefälle von 666 bis 640 K zu verzeichnen. Hier ist eine wesentlich längere kühle Temperaturzone 20 in einem Temperaturbereich von etwa 640 bis 651 K vorhanden, die sich über den gesamten Halsabschnitt radial erstreckt.

Damit ist auch hier klar zu erkennen, dass die Ausbildung der Stege 5 der erfindungsgemäßen Bremsscheibe 1 nicht nur eine verbesserte Wärmeabfuhr sondern auch eine im Wesentlichen gleichmäßige Temperaturverteilung ebenfalls im Bereich der Freibereiche VIII des Innenreibrings 2 und des Außenreibrings 3 ermöglicht.

Hiermit ergeben sich also folgende Vorteile.

- eine verbesserte Temperaturstabilisierung
- eine niedrigere Oberflächentemperatur der Bremsscheibe 1
- ein erhöhter konvektiver Wärmeabtransport und erhöhte Abkühlungsraten
- eine reduzierte Schirmung der Bremsscheibe 1
- eine Verbesserung eines Wärmerissverhaltens
- ein entsprechend reduzierter Verschleiß der Reibkomponenten Reibbelag 9 und Bremsscheibe 1

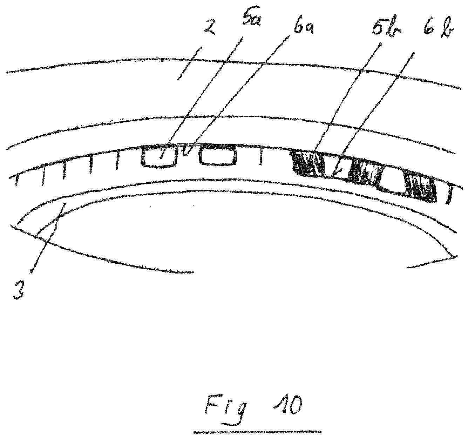

Fig. 9 zeigt eine schematische Perspektivansicht einer weiteren Variante der erfindungsgemäßen Bremsscheibe 1. Fig. 10 zeigt dazu eine schematische Teilansicht des inneren Durchmessers der Bremsscheibe 1

In dieser Variante sind Stege 5a und Zwischenräume mit rechtwinkligem Querschnitt und Längsachsen 22 vorgesehen, wobei die Längsachsen 22 parallel zu der Bremsscheibenachse 1a verlaufen.

Im Gegensatz dazu sind weitere Stege 5 angeordnet, deren Längsachsen 22a nicht parallel zu der Bremsscheibenachse 1a verlaufen, sondern in Bezug auf diese in einem Winkel ungleich 0° angeordnet sind. Diese Anordnung bildet trapezförmige Zwischenräume und weist dadurch einen in Bezug auf einen rechteckförmigen Zwischenraum einen verbesserten hydraulischen Durchmesser auf.

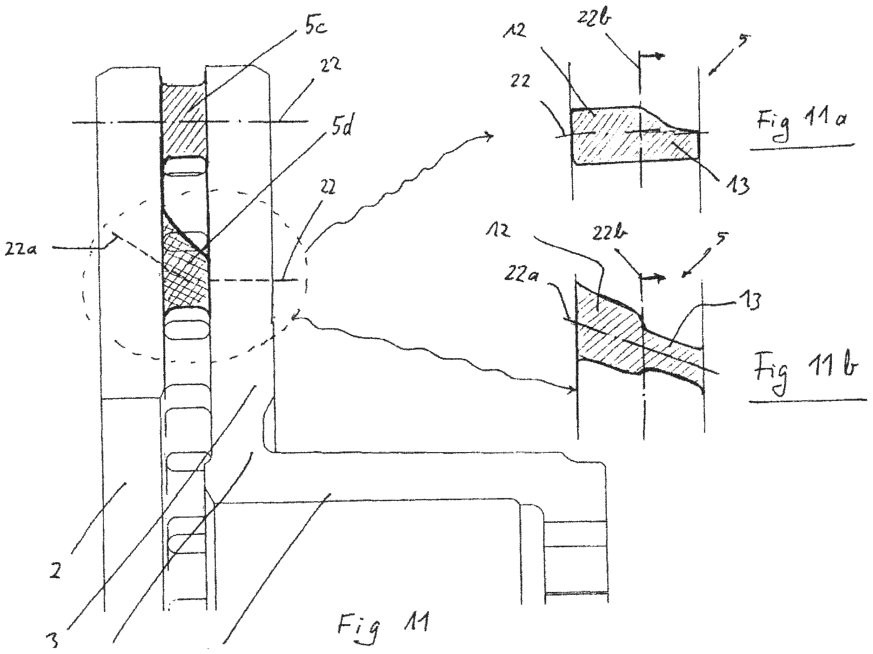

In Fig. 11 ist ein im Wesentlichen rechteckiger Querschnitt eines Stegs 5c sowie ein Steg 5d mit einem im Wesentlichen trapezförmigen Querschnitt gezeigt. Die Längsachse 22 des Stegs 5c verläuft parallel zu der Bremsscheibenachse 1a. Im Gegensatz dazu weist der Steg 5d zwei Bereiche auf, von denen einer die Längsachse 22 parallel zu Bremsscheibenachse 1a besitzt und der andere eine schräg dazu angeordnete Längsachse 22a.

Fig. 11a zeigt eine vergrößerte Längsschnittansicht eines Stegs 5 mit einer parallel zur Bremsscheibenachse 1a verlaufenden Längsachse 22. Hierbei verläuft der Innenstegabschnitt 12 von der linken Seite bis zu einer Trennlinie 22b mit konstantem Querschnitt und geht dann nur einseitig verkleinert in den Außenstegabschnitt 13 über. Die Trennlinie 22b kann sowohl in der Mitte des Stegs 5 in Bezug auf seine Längsachse 22 liegen, als auch zum Außenstegabschnitt 13 (oder zum Innenstegabschnitt 12) hin verschoben sein. Dies deutet ein kleiner Pfeil an der Trennlinie 22b an.

In Fig. 11b ist eine vergrößerte Längsschnittansicht eines Stegs 5 mit einer schräg verlaufenden Längsachse 22a dargestellt. Auch hier kann die Trennlinie 22b zwischen dem Innenstegabschnitt 12 und dem Außenstegabschnitt 13 in der Mitte oder davon verschoben sein.

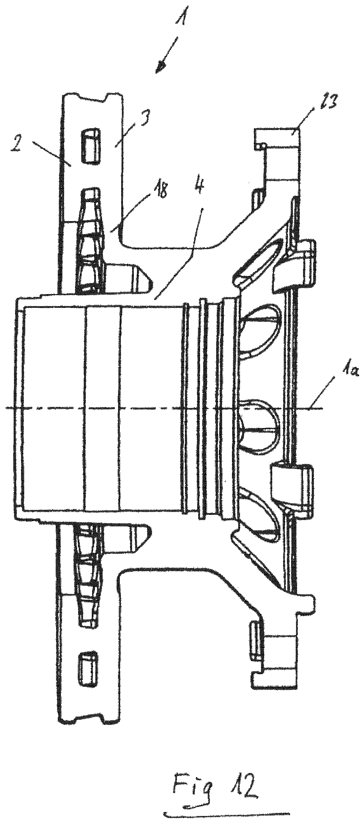

Fig. 12 stellt eine erfindungsgemäße Bremsscheibe 1 mit einer integrierten Nabe 4 und einem Radflansch 23 dar. Die Nabe 4 erstreckt sich durch die Bremsscheibe 1 hindurch.

Die Erfindung wird durch das oben beschriebene Ausführungsbeispiel nicht eingeschränkt, sondern sie ist im Rahmen der beigefügten Ansprüche modifizierbar.

Es ist so z.B. denkbar, dass die Innenstegabschnitte 12a und Außenstegabschnitte 13a nicht notwendigerweise die gezeigte abrupte Querschnittsänderung in Stufenform, sondern auch eine gleichmäßige Veränderung ihrer Querschnitte aufweisen können.

Ebenfalls können zusätzliche Vorsprünge zu den vorhandenen Stegen auf der Innenfläche 6a des Innenreibrings 2 vorgesehen sein, die nicht mit der Innenfläche 6b des Außenreibrings 3 wärmeleitend verbunden sind.

Zudem ist es auch denkbar, dass die Reibringe 2, 3 unterschiedliche Dicken aufweisen können.

**Bezugszeichenliste**

| | |
|---|---|
| 1, 1' | Bremsscheibe |
| 1a, 1'a | Bremsscheibenachse |
| 2 | Innenreibring |
| 3 | Außenreibring |
| 4 | Nabe |
| 4a | Nabenkörper |
| 4b | Nabenplatte |
| 4c | Nabenöffnung |
| 5, 5a, 5b, 5c, 5d | Steg |
| 6 | Kühlkanal |
| 6a, 6b | Innenfläche |
| 7, 8 | Außenseite |
| 9 | Reibbelag |
| 10 | Scheibenbremse |
| 11, 11a, 11b, 11c | Kreis |
| 12 | Innenstegabschnitt |
| 12a | Innenstegaußenfläche |
| 13 | Außenstegabschnitt |
| 13a | Außenstegaußenfläche |
| 14, 14a; 15, 15a; 16 | Wärmefluss |
| 17 | Reibfläche |
| 18 | Übertragungsabschnitt |
| 19, 19' | Halsabschnitt |
| 20, 20'; 21, 21' | Temperaturzone |
| 22, 22a | Längsachse |
| 22b | Trennlinie |
| 23 | Radflansch |
| 50, 50a; 51; 52; 53; 54 | Verbindung |
| 110, 111 | Zone |
| S | Schirmung |
| SV | Strömungsverlauf |
| x, y, z | Koordinaten |
| VII | Belagbereich |
| VIII | Freibereich |

**Patentansprüche**

1. Bremsscheibe (1) für eine Scheibenbremse (10), insbesondere für ein Kraftfahrzeug, ausgebildet als innenbelüftete Bremsscheibe (1) mit einem Innenreibring (2) und einem Außenreibring (3), welche einander gegenüberliegen und voneinander mit Stegen (5) unter Bildung eines Zwischenraums als Kühlkanal (6) beabstandet und verbunden sind, wobei der Außenreibring (3) mit einer Nabe (4) verbunden ist, wobei eine erste Anzahl von Stegen (5) im Verlauf einer Längsachse eines jeweiligen Stegs (5) Querschnitte unterschiedlicher Größe, wobei sich der Querschnitt des betreffenden Stegs ausgehend von einem Ende des Stegs über den Verlauf des Stegs längs seiner Längsachse bis zu dem anderen Ende des Stegs bzw. zu dem Ende eines Abschnitts in seiner Größe in Abhängigkeit von der Koordinate der Längsachse verändert, aufweist, wobei

   eine zweite Anzahl von Stegen (5) der ersten Anzahl von Stegen (5) miteinander verbunden sind, wobei

   die Stege (5) jeweils zwei Abschnitte aufweisen, nämlich einen Innenstegabschnitt (12), der mit einer Innenfläche (6a) des Innenreibrings (2) verbunden ist, und einen Außenstegabschnitt (13), der mit einer Innenfläche (6b) des Außenreibrings (3) verbunden ist, wobei ein Querschnitt des Innenstegabschnitts (12) eine Größe aufweist, die zu einer Größe eines Querschnitts des Außenstegabschnitts (13) unterschiedlich ist,
wobei
der Innenstegabschnitt (12) eines jeden Stegs (5) der Anzahl von Stegen (5) einen größeren Querschnitt als der Außenstegabschnitt (13) eines jeden Stegs (5) der Anzahl von Stegen (5) aufweist,
**dadurch gekennzeichnet, dass**
jeweils ein Innenstegabschnitt (12) und ein Außenstegabschnitt (13) eines jeden Stegs (5) der Anzahl von Stegen (5) in der Mitte des jeweiligen Stegs (5) in Form einer Stufe untereinander verbunden sind, wobei diese Stufe einen Querschnittssprung als abrupte Querschnittsänderung bildet.

2.  Bremsscheibe (1) nach Anspruch 1,
    **dadurch gekennzeichnet, dass**
    die erste Anzahl von Stegen (5) sämtliche Stege (5) umfasst.

3.  Bremsscheibe (1) nach Anspruch 1,
    **dadurch gekennzeichnet, dass**
    die zweite Anzahl von Stegen (5) zu zweit, zu dritt oder zu viert miteinander verbunden sind.

4.  Bremsscheibe (1) nach Anspruch 3,
    **dadurch gekennzeichnet, dass**
    die Verbindungen (50, 50a; 51, 52, 53, 54) der zweiten Anzahl von Stegen (5) gerade, schräg, rautenförmig, sternförmig, abgerundet oder/und radial zu einer Bremsscheibenachse (1a) ausgebildet sind.

5.  Bremsscheibe (1) nach einem der vorhergehenden Ansprüche,
    **dadurch gekennzeichnet, dass**
    der Querschnitt eines jeden Stegs (5) der Anzahl von Stegen (5) im Verlauf der Längsachse einen jeden Stegs (5) der Anzahl von Stegen (5) ausgehend von der Innenfläche (6a) des Innenreibrings (2) stufenlos abnimmt.

6.  Bremsscheibe (1) nach Anspruch 5,
    **dadurch gekennzeichnet, dass**
    der Querschnitt eines jeden Stegs (5) der Anzahl von Stegen (5) im Verlauf der Längsachse einen jeden Stegs (5) der Anzahl von Stegen (5) ausgehend von einer Trennlinie (22b) zwischen dem Innenstegabschnitt (12) und dem Außenstegabschnitt (13) stufenlos abnimmt.

7.  Bremsscheibe (1) nach einem der vorhergehenden Ansprüche,
    **dadurch gekennzeichnet, dass**
    zumindest die Innenstegabschnitte (12) in ihren Verbindungsbereichen an der Innenfläche (6a) des Innenreibrings (2) im Verlauf der Längsachse des zugehörigen Stegs (5) jeweils bis zu der Innenfläche (6a) eine stetige Zunahme ihres Querschnitts in Form einer Fase oder einer Abrundung aufweisen.

8.  Bremsscheibe (1) nach einem der vorhergehenden Ansprüche,
    **dadurch gekennzeichnet, dass**
    auf der Innenfläche (6a) des Innenreibrings (2) zusätzliche Vorsprünge vorgesehen sind, die von der Innenfläche (6a) des Reibrings (2) in den Kühlkanal (6) hervorstehen.

9.  Bremsscheibe (1) nach einem der vorhergehenden Ansprüche,
    **dadurch gekennzeichnet, dass**
    die Stege (5) auf zu einer Bremsscheibenachse 1a) konzentrisch angeordneten Kreisen (11, 11a, 11b, 11c) angeordnet sind.

10. Bremsscheibe (1) nach Anspruch 9,
    **dadurch gekennzeichnet, dass**
    die Querschnitte der Stege (5) der Anzahl von Stegen (5) je Kreis (11a, 11b, 11c) kleiner in Bezug auf den vorherigen Kreis (11, 11a, 11b, 11c) ausgehend von dem größten Kreis (11) in der Nähe des Außenumfangs der Bremsscheibe (1) in radialer Richtung auf die Bremsscheibenachse (1a) hin werden.

11. Bremsscheibe (1) nach einem der vorhergehenden Ansprüche,
    **dadurch gekennzeichnet, dass**
    die Bremsscheibe (1) mit einer Nabe (4) einteilig ausgebildet ist.

12. Scheibenbremse (10), insbesondere für ein Kraftfahrzeug, aufweisend eine Bremsscheibe (1) nach einem der vorhergehenden Ansprüche.

**Claims**

1. A brake disc (1) for a disc brake (10), in particular for a motor vehicle, in the form of an internally ventilated brake disc (1) having an inner friction ring (2) and an outer friction ring (3) that are located opposite one another and separated from and connected to one another by connecting pieces (5), thereby forming a gap that serves as a cooling channel (6), the outer friction ring (3) being connected to a hub (4), a first number of connecting pieces (5) having differently sized cross sections over the course of a longitudinal axis of each connecting piece (5), the cross section of the connecting section changing in size dependent on the coordinate of the longitudinal axis starting from one end of the connecting section over the course of the connecting piece along its longitudinal axis to the other end of the connecting piece or to the end of a section,
a second number of connecting pieces (5) of the first number of connecting pieces (5) being connected to one another, the connecting pieces (5) each having two sections, namely an inner connecting-piece section (12) that is connected to an inner surface (6a) of the inner friction ring (2), and an outer connecting-piece section (13) that is connected to an inner surface (6b) of the outer friction ring (3), the size of the cross section of the inner connecting-piece section (12) being different to the size of the cross section of the outer connecting-piece section (13),
the inner connecting piece section (12) of each connecting piece (5) of the number of connecting pieces (5) having a larger cross section than the outer connecting-piece section (13) of each connecting piece (5) of the number of connecting pieces (5),
**characterised in that**
one inner connecting piece section (12) and one outer connecting-piece section (13) of each connecting piece (5) of the number of connecting pieces (5) being connected to one another by a step in the centre of the connecting piece (5), this step forming a cross-section projection in the form of an abrupt change in cross section.

2. A brake disc (1) according to claim 1,
**characterised in that**
the first number of connecting pieces (5) comprises all the connecting pieces (5).

3. A brake disc (1) according to claim 1,
**characterised in that**
the second number of connecting pieces (5) are connected to one another in twos, threes or fours.

4. A brake disc (1) according to claim 3,
**characterised in that**
the connections (50, 50a; 51, 52, 53, 54) of the second number of connecting pieces are straight, oblique, diamond-shaped, star-shaped, rounded and/or arranged radially in relation to a brake disc axis (1a).

5. A brake disc (1) according any one of the preceding claims,
**characterised in that**
the cross section of each connecting piece (5) of the number of connecting pieces (5) decreases progressively starting from the inner surface (6a) of the inner friction ring (2) over the course of the longitudinal axis of each connecting piece (5) of the number of connecting pieces (5).

6. The brake disc (1) according to claim 5,
**characterised in that**
the cross section of each connecting piece (5) of the number of connecting pieces (5) decreases progressively starting from a partition line (22b) between the inner connecting-piece section (12) and the outer connecting-piece section (13) over the course of the longitudinal axis of each connecting piece (5) of the number of connecting pieces (5).

7. A brake disc (1) according to any one of the preceding claims,
**characterised in that**
the cross sections of at least the inner connecting-piece sections (12) in the regions where they connect to the inner surface (6a) of the inner friction ring (2) increase steadily in the form of a chamfer or rounded portion as far as the inner surface (6a) over the course of the longitudinal axis of the associated connecting piece (5).

8. A brake disc (1) according to any one of the preceding claims,
**characterised in that**
provided on the inner surface (6a) of the inner friction ring (2) are additional projections that project from the inner surface (6a) of the friction ring (2) into the cooling channel (6).

9. A brake disc (1) according to any one of the preceding claims,
**characterised in that**
the connecting pieces (5) are arranged that are arranged concentrically in relation to a brake disc axis (1a).

10. A brake disc (1) according to claim 9,
**characterised in that**
in each circle (11a, 11b, 11c) the cross sections of the connecting pieces (5) of the number of connecting pieces (5) decrease in size in relation to those in the previous in the circle (11, 11a, 11b, 11c) from the largest circle (11) close to the outer circumference of the brake disc (1) radially towards the brake disc axis (1a).

11. A brake disc (1) according to any one of the preceding claims,
**characterised in that**
the brake disc (1) is formed in one piece with a hub (4).

12. A disc brake (10), in particular for a motor vehicle, comprising a brake disc (1) according to any one of the preceding claims.

**Revendications**

1. Disque (1) de frein d'un frein (10) à disque, notamment d'un véhicule automobile, constitué sous la forme d'un disque (1) de frein à alimentation en air de l'intérieur, comprenant un anneau (2) intérieur de friction et un anneau (3) extérieur de friction, qui se font face l'un à l'autre et qui sont maintenus à distance l'un de l'autre et reliés par des entretoises (5) avec formation d'un espace intermédiaire comme conduit (6) de refroidissement, dans lequel l'anneau (3) extérieur de friction est relié à un moyeu (4), dans lequel, un premier nombre d'entretoises (5), le long d'un axe longitudinal d'une entretoise (5) respective, des sections transversales de dimensions différentes, la section transversale de l'entretoise concernée se modifiant, en partant d'une extrémité de l'entretoise sur le cours de l'entretoise, longitudinalement à son axe longitudinal, jusqu'à l'autre extrémité de l'entretoise ou jusqu'à l'extrémité d'un tronçon, en dimension en fonction de la coordonnée sur l'axe longitudinal,
dans lequel
un deuxième nombre d'entretoises (5) du premier nombre d'entretoises (5) sont reliées entre elles,
dans lequel
les entretoises (5) ont chacune deux tronçons, à savoir un tronçon (12) d'entretoise intérieur, qui est relié à une surface (6a) intérieure de l'anneau (2) intérieur de friction et un tronçon (13) d'entretoise extérieur, qui est relié à une surface (6b) intérieure de l'anneau (3) extérieur de friction, une section transversale du tronçon (12) d'entretoise intérieur ayant une dimension qui est différente d'une dimension d'une section transversale du tronçon (13) d'entretoise extérieur,
dans lequel
le tronçon (12) d'entretoise intérieur de chaque entretoise (5) du nombre d'entretoises (5) a une section transversale plus grande que le tronçon (13) d'entretoise extérieur de chaque entretoise (5) du nombre d'entretoises (5),
**caractérisé en ce que**
respectivement, un tronçon (12) d'entretoise intérieur et un tronçon (13) d'entretoise extérieur de chaque tronçon (5) du nombre d'entretoises (5) sont reliés entre eux au milieu de l'entretoise (5) sous la forme d'un échelon, cet échelon formant un saut de section transversale sous la forme d'une variation abrupte de section transversale.

2. Disque (1) de frein suivant la revendication 1,
**caractérisé en ce que**
le premier nombre d'entretoises (5) comprend l'ensemble des entretoises (5).

3. Disque (1) de frein suivant la revendication 1,
**caractérisé en ce que**
le deuxième nombre d'entretoises (5) sont reliées entre elles à deux, à trois ou à quatre.

**4.** Disque (1) de frein suivant la revendication 3,
**caractérisé en ce que**
les liaisons (50, 50a ; 51, 52, 53, 54) du deuxième nombre d'entretoises (5) sont rectilignes, en biais, en forme de losange, en forme d'étoile, arrondies ou/et constituées radialement à un axe (1a) de disque de frein.

**5.** Disque (1) de frein suivant l'une des revendications précédentes,
**caractérisé en ce que**
la section transversale de chaque entretoise (5) du nombre d'entretoises (5), le long de l'axe longitudinal de chaque entretoise (5) du nombre d'entretoises (5), diminue sans palier à partir de la surface (6a) intérieure de l'anneau (2) intérieur de friction.

**6.** Disque (1) de frein suivant la revendication 5,
**caractérisé en ce que**
la section transversale de chaque entretoise (5) du nombre d'entretoises (5), le long de l'axe longitudinal de chaque entretoise (5) du nombre d'entretoises (5), diminue sans palier à partir d'une ligne (22b) de séparation entre le tronçon (12) d'entretoise intérieur et le tronçon (13) d'entretoise extérieur.

**7.** Disque (1) de frein suivant l'une des revendications précédentes,
**caractérisé en ce qu'**
au moins les tronçons (12) d'entretoise intérieurs ont, dans leurs parties de liaison avec la surface (6a) intérieure de l'anneau (2) intérieure de friction, le long de l'axe longitudinal de l'entretoise (5) associée, respectivement jusqu'à la surface (6a) intérieure, une augmentation constante de leur section transversale, sous la forme d'un biseau ou d'un arrondi.

**8.** Disque (1) de frein suivant l'une des revendications précédentes,
**caractérisé en ce qu'**
il est prévu, sur la surface (6a) intérieure de l'anneau (2) intérieur de friction, des saillies supplémentaires, qui font saillie de la surface (6a) intérieure de l'anneau (2) de friction dans le conduit (6) de refroidissement.

**9.** Disque (1) de frein suivant l'une des revendications précédentes,
**caractérisé en ce que**
les entretoises (5) sont disposées sur des cercles (11, 11a, 11b, 11c) concentriques à un axe (la) de disque de frein.

**10.** Disque (1) de frein suivant la revendication 9,
**caractérisé en ce que**
les sections transversales des entretoises (5) du nombre d'entretoises (5) par cercle (11a, 11b, 11c) deviennent plus petites par rapport aux cercles (11, 11a, 11b, 11c) précédents à partir du cercle (11) le plus grand au voisinage du pourtour extérieur du disque (1) de frein dans la direction radiale sur l'axe (1a) du disque de frein.

**11.** Disque (1) de frein suivant l'une des revendications précédentes,
**caractérisé en ce que**
le disque (1) de frein est constitué d'une seule pièce avec un moyeu (4).

**12.** Frein (10) à disque, notamment pour un véhicule automobile ayant un disque (1) de frein suivant l'une des revendications précédentes.

EP 3 516 257 B1

Stand der Technik

Fig. 1

14

Fig. 2

Fig. 3

Fig. 4

EP 3 516 257 B1

Fig. 5

18

Fig. 6

EP 3 516 257 B1

Fig. 7a

Fig. 7

20

Fig. 8

Fig. 9

EP 3 516 257 B1

Fig 10

22

EP 3 516 257 B1

Fig. 11a

Fig. 11b

Fig. 11

23

EP 3 516 257 B1

Fig 12

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013210700 A
- WO 2015092671 A
- EP 1396654 A2
- EP 0566008 A1

**In der Beschreibung aufgeführte Nicht-Patentliteratur**

- Bremsenhandbuch Friedrich. Sohn Verlag, 2006